# EUROPEAN PATENT APPLICATION

(11) **EP 1 339 199 A1**
(43) Date of publication of application: **27.08.2003**
(21) Application number: 02354032.1
(22) Date of filing: 22.02.2002
(51) Int. Cl.: H04L 29/06, G06F 1/00

(54) **Dynamic user authentication**

(71) Applicant: Hewlett-Packard Company, Palo Alto, CA 94304 (US)
(72) Inventor: Brebner, Gavin, 38410 St Martin D'Uriage (FR); Gittler, Mihaela, 38700 Corenc (FR)
(74) Representative: Lloyd, Richard Graham (GB)

(57) **Abstract**

The invention relates to a method of authenticating a users ability to carry out a transaction. The method includes the steps of:
- a user initiating an authentication request in order to carry out a secure transaction;
- dynamically collecting and assessing a plurality of confidence parameters, said confidence parameters reflecting factors related to the security of the transaction context; and
- dynamically maintaining a confidence level based on the plurality of confidence parameters whereby if the confidence level drops below a predetermined confidence threshold, the transaction is not authenticated and if the confidence level exceeds a predetermined confidence threshold, the transaction is authenticated.
Confidence parameters may include factors such as binary login processes, the location of the user, collocation of multiple users and other factors of the transaction context which might affect the security of the transaction. The invention may be applied to the authentication of financial transactions and verifying the identity of a user in other security sensitive contexts. The invention also provides for a system for carrying out the invention.

## Description

### Technical Field

The present invention relates to user authentication. More particularly, although not exclusively, the invention relates to processes and apparatus for verifying the identity of a user or process initiated by a user for the purpose of accessing resources, performing operations, retrieving data and the like. More specifically, although without limitation, the present invention relates to the evaluation or determination of an authentication process based on static and dynamic context parameters.

### Background Art

As a preliminary point, the following discussion will refer to user and process authentication. User authentication will be familiar to the reader in terms of a dynamic or interactive verification process occurring in real time between a user and a resource. However, it is anticipated that the invention may be implemented in situations where a process needs to be authenticated. In this case, a user might initiate a process which itself requires authentication when it is initialized or operates. An example of a process might be performing a sequence of financial transactions whereby a user submits a descriptor file which accesses and manipulates financial records. This indirectly authenticates the user and the validity of the transaction. It is anticipated that scenarios may exist where process authentication can be considered distinct from an interactive form of user authentication. Such variations are considered to be within the scope of the present invention. Although the discussion has referred generally to the concept of a 'transaction', this operation includes within its scope the specific class of action of accessing a resource. A resource may be a database, document or similar. In this case, the sensitivity of the resource would be predefined according to external criteria.

A binary login process exemplifies the simplest type of user authentication. This type of process usually requires two input parameters: a login identifier, or *userid*, which identifies the user to the recipient system, and a password which verifies that the user is in fact the authorized, or trusted, user of that identifier. This type of authentication is suited to situations where the security context of the user is well known for a particular transaction context and does not change over time. Once a user is authenticated in such a system, the security of the transaction is assumed to be one hundred per cent or within the anticipated confidence level of the login and password mechanism.

Binary approaches such as this are satisfactory in contexts where the confidence in the security level is static and assured. An example is where a user logs into a desktop personal computer in an office environment. Here, extrinsic security effects such as restricted access to the input machines themselves increases the anticipated security and confidence level of the interaction as does the existence of a secure static physical data link between the users computer and the remote data or resource which the user wishes to access.

It is known to implement stepped or incremental forms of authentication in situations where the transaction or desired resources have varying levels of trust-sensitivity.

An example of this situation might be where a user logging into a corporate intranet is automatically allowed access to internal company documents. However, to access sensitive resources a secondary and perhaps tertiary, login process would be required. According to this example, an employee might have access to company resources such as memos, procedures, news and internal library catalogues. However, a member of the companies legal department might need access to confidential and highly sensitive documents such as legal pleadings and material which is restricted to specific people or organizations within the corporate, but is nevertheless stored on the same intranet. In this situation, when attempting to access the trust-sensitive materials, the user is presented with a secondary login process which requires that the user is authenticated before he or she is allowed access to these specialized resources.

Such incremental login processes are common in intranets using HTML-based resources whereby attempts to access a restricted *url* produces a login and password dialogue. In this example, this secondary login would require that a user identifier be input, which identifies the user as being a member of a group of allowed users, along with a password which verifies that the user is actually a trusted member of that group.

These forms of incremental authentication systems are adequate when used in contexts where the transaction context is static and predetermined. In such cases, the confidence in the security of the transaction context is predicated on an *a priori* assumption about the behaviour of the user.

Other more complex authentication systems include those which rely on the input of a token or a biometric parameter uniquely identifying the user.

One example of a token-based authentication system is predicated on the user having a userid and password as well has having access to a token generator. To achieve authentication, the user performs a two-step authentication comprising a standard binary login followed by a token authentication. The token is obtained from a device in the users possession. The token generator can itself require the input of a secure key or personal identification number (PIN) whereupon the token is generated. The confidence level in this case is increased by the token generator using a secure encryption technique. The authenticating process shielding the desired resource evaluates the token that is input and authentication is achieved if the token is decrypted or otherwise evaluated correctly.

In this case, the confidence level of the transaction is higher as not only does the user need to know the initial binary userid/login information, he or she also must have access to, and be able to properly operate, a correct physical token-generating device. Since the aim of authentication is to prevent unauthorized access to resources, the confidence level of such an interaction will be higher than if a user merely carried out a userid/login binary authentication process.

Biometric authentication is currently still the subject of research and there are relatively few practical systems in use at this time. Those that are presently feasible use iris scanning, fingerprint matching and the identification of similar forms of unique biometric input unique to the user. However, biometric parameter analysis can be considerably more complicated than processing password or token data as it requires specialized hardware.

A further complicating factor in the field of secure transactions is that trends in microprocessor-based hardware are moving away from the traditional desk-bound personal computers. Hybrid devices such as mobile phones, PDAs and tablet-based computers are themselves now practical for use as authentication devices.

One of the major applications for secure user authentication is in the field of e-commerce. Here e-commerce is understood to include mobile financial transactions such as credit card payment, online ordering and similar. In this context it is desired that a user be able to provide transaction authentication information from mobile locations quickly, easily and securely.

To this end, and coupled with improvements in wired and wireless bandwidth capability, it is possible to access highly sensitive data using such devices. For example a handheld PDA running a thin-client browser coupled with a mobile phone can be used to access an internet banking website in order to carry out highly trust-sensitive financial transactions. At present, such transaction contexts are protected using the secure socket layer (SSL) protocol under HTTP. However, this technique is relatively inflexible and essentially corresponds to a binary authentication method where the transaction context is assumed to be static once the user is initially authenticated.

Of course there is a broad spectrum of what constitutes a trust-sensitive transaction. Devices such as cellphones can now be used as simple payment mechanisms in the context of billing vending machine transactions to a users mobile telecoms account and similar small-value transactions.

Notwithstanding this, user authentication is critical to the acceptance and practicality of secure transactions. Thus, there is an ongoing need for systems which provide reliable authentication and which are extensible in the context of future developments in user devices, paradigms and the networks over which such devices communicate.

The present invention attempts to overcome or at least ameliorate a number of the abovementioned limitations inherent in the present techniques as well as anticipating some issues raised by evolving usage habits emerging from take-up of new technology.

### Disclosure of the Invention

In one aspect the invention provides for a method of authenticating a users ability to carry out a transaction, the method including the steps of:
- a user initiating an authentication request in order to carry out a secure transaction;
- dynamically collecting and assessing a plurality of confidence parameters, said confidence parameters reflecting factors related to the security of the transaction context; and
- dynamically maintaining a confidence level based on the plurality of confidence parameters whereby if the confidence level drops below a predetermined confidence threshold, the transaction is not authenticated and if the confidence level exceeds a predetermined confidence threshold, the transaction is authenticated.

The predetermined confidence threshold preferably reflects the sensitivity of the transaction.

In an alternative embodiment, a static confidence window may be defined in response to substantially static confidence parameters, the confidence window having an upper and lower limit reflecting an inherent upper and lower limit that the confidence level can reach.

Preferably in the method as hereinbefore defined, user authentication is inhibited if the confidence threshold of the transaction is outside the confidence window.

The user preferably alters the confidence level, either autonomously or in response to an external request, by varying and/or adding one or more confidence parameters.

The confidence level may vary with time and/or transaction context.

Alternatively, the confidence level may decay over time.

The confidence parameters may include:
- intrinsic context parameters such as user input device security, user location, user identity, multiple user co-location, time after users authentication request initiation, required transaction security level, required resource security level and the like; and/or
- extrinsic context parameters such as changes in network characteristics, dynamic changes in the sensitivity of the transaction and the like.

In a preferred embodiment, the transaction corresponds to a user requesting access to a resource.

The confidence threshold may change as a function of the capability of the users input device.

In an alternative embodiment, the confidence level is preferably determined based the confidence parameters and /or on accumulated statistical data relating to the behaviour of the user.

In a further aspect, the invention provides for a system for dynamically authenticating a transaction, the system including:
- a confidence engine adapted to:
   o dynamically maintain at least one confidence level by monitoring a plurality of confidence parameters, the confidence level reflecting the security of the transaction context;
   o compare the derived confidence level with a predetermined confidence threshold, the confidence threshold reflecting the security required to perform the transaction;
   o when the confidence level is below the confidence threshold, requesting new confidence parameters or varying existing confidence parameters; and
   o when the confidence level is above the confidence threshold, authenticating the transaction;
- a plurality of authentication means adapted to dynamically provide, to the confidence engine, confidence parameters relating to the security of the transaction context.

Preferably the system further includes a rule database adapted to correlate the plurality of confidence parameters with the confidence level.

Preferably the system further includes a guard means adapted to act as a proxy for the resources which are the subject of the transaction.

Preferably the system further includes device means adapted so that the user can interact with the authentication system, wherein the device has an authentication level which is taken into account when authenticating the transaction.

### Brief Description of the Drawings

The present invention will now be described by way of example only and with reference to the drawings in which:
- Figure 1:: illustrates a simplified schematic of an embodiment of a dynamic authentication system;
- Figure 2:: illustrates a time-varying authentication process;
- Figure 3:: illustrates a time-varying authentication process where the device characteristics change;
- Figure 4:: illustrates a dataflow diagram for an example of a transaction authentication; and
- Figure 5:: illustrates the process of updating the Rule Base.

### Best Mode for Carrying Out the Invention

The present invention will be described in the context of a generalized abstract model of a transaction and the security issues surrounding it as well as a number of specific exemplary embodiments.

The description of these embodiments follows a transaction request/authentication model. This approach is considered to be a useful framework describing the exemplary embodiments below. However, it is to be understood that the method of the invention is inherently dynamic and could equally be described by considering a process which focuses on sequentially or concurrently accessing resources on a network having specific access control levels.

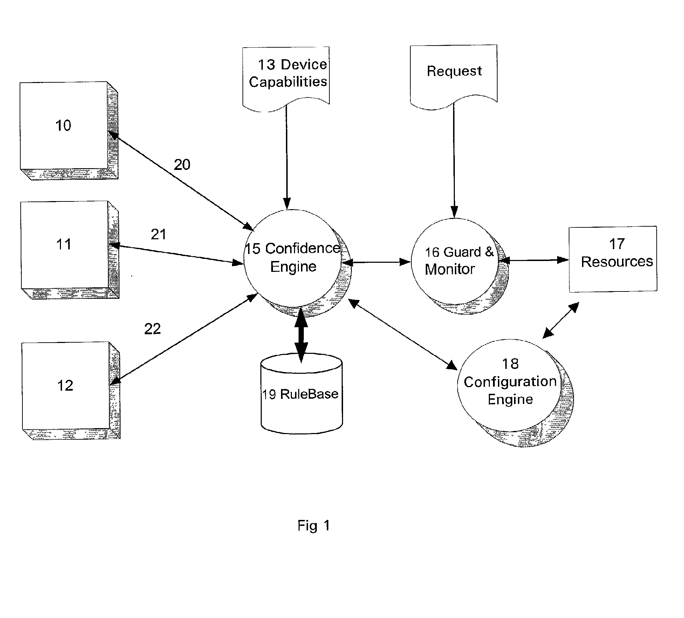

Referring to Figure 1. a high-level functional diagram of an embodiment of the invention is shown. The various components in figure 1 are intended to be representational only and their functionality may be implemented using a range of technologies and suitable hardware. Examples will be given where they help illustrate the operation of the functional block.

The authentication system shown in figure 1 includes a confidence engine 15 which is adapted to dynamically maintain at least one confidence level by monitoring (21, 22, 23) a plurality of confidence parameters. The confidence engine 15 may be an application running on a server.

Confidence parameters are numerical or logical metrics which correspond to specific measures of the confidence inherent in various aspects of the transaction.

It can be helpful to classify these parameters in two ways, intrinsic and extrinsic.

Intrinsic context parameters are those which can be considered to be under the control of, or within the scope of, the user. These include things such as the physical characteristics and security features of the user input device, the users location, the users identity, co-location of multiple users or individuals and the elapsed time after the users initial authentication request or most recent authentication act.

Extrinsic context parameters include thing such as changes in communications network characteristics, the security of the authentication system itself and dynamic changes in the sensitivity of the transaction.

An extrinsic confidence parameter may perhaps even reflect a transitory circumstance decoupled from the transaction context itself. For example, the authentication system might be able to take into account the security history of the environment. Such history might include a suspicion that the system may be susceptible to a hacking attack or has been the subject of a recent hacking attack. In this case, additional authentication may be required to allow the transaction to proceed. Other historical factors might also include susceptibility to particular viruses etc. Taking these factors into account will complicate the function of the Rule Base. However, it is considered that the invention may be extended to this degree of complexity.

Extrinsic confidence parameters can also include the required transaction security level or the resource security level that must be achieved in order to access that resource. It is noted that when static, these parameters can be used to define the confidence level which must be attained by the user. That is, the confidence *threshold* which must be exceeded for authentication to be achieved and the transaction to proceed. An alternative preferred embodiment of the invention uses the concept of a confidence window to simply the confidence level comparison. This will be discussed in detail below.

The confidence level reflects the security of the transaction context and can be thought of as a dynamically determined measure of the security of the transaction at a point in time. The confidence level can change, for example as the user changes location, re-authenticates or uses two different devices in close proximity. Other confidence parameter changes are possible.

As noted above, the confidence engine compares the confidence level derived from the confidence parameters with a predetermined confidence threshold. When the confidence level is below the confidence threshold, the confidence engine requests new confidence parameters or alternatively or in combination, varies existing confidence parameters. When the confidence level is above the confidence threshold, the confidence engine authenticates the context and the transaction can proceed. It is noted that authentication of the user is considered a special case of authentication of the context. The context may include additional security limitations such as location etc which are additional to verifying the real identity of the user.

The system also includes a plurality of authentication mechanisms 10, 11 and 12 each exhibiting a confidence which can be placed in the result of using the corresponding mechanism. These means are functional elements which are used to dynamically provide the confidence engine with confidence parameters relating to the security or other aspects of the transaction context.

Examples of authentication mechanisms include the type of user device into which the transaction request 14 is input. In the case of a PDA, its data may be protected by a robust password system and the device itself always be in the possession of the user. Therefore, as an authentication mechanism, the system would have a high degree of confidence in its use.

In some situations, the device capability can be the defining characteristic of the transaction context. Therefore it can be considered as a separate functional block 13.

Another example of an authentication mechanism (10, 11, 12) is a location system. Here the transaction may require a user to be in a specified location for authentication to be achieved. For example, a user of a corporate intranet may only be allowed access to certain resource when he or she is physically on the business site. In this case the system checks that the user is at the required location and authentication is not achieved if the user is not at the required location.

Another example of an authentication mechanism is multiple-user or multiple-individual collocation. Here, the transaction may require the physical presence of two specified individuals at the same location, each carrying out a binary login authentication. Such a context might be found where unaccompanied access to extremely sensitive information is forbidden or illegal. Sensing and/or location hardware in conjunction with each individuals binary login device could be used to verify the collocation. For a highly sensitive database or a financial transaction, the system might require a collocation, i.e.: the presence of two identified people and/or viewing the resource from at a specified location. In this case, an appropriate authentication mechanism such as proximity sensing hardware or the Global Positioning System could be used to authenticate the users.

The system illustrated in figure 1 may also implement a Guard and Monitor functional unit 16. This can be configured as a proxy server to handle and monitor access to the Resources 17. The proxy is configured to act as a firewall and screen access to the resources depending on whether the transaction has been authenticated.

A configuration engine 18 may be included. This is a functional unit which handles and coordinates interactions between other funcational components of the system. It manages profile information and other housekeeping information related to the rules applied to contexts as well as potentially checking the transaction status and requirements.

In many transaction contexts there are certain confidence parameters which can be considered as fundamental and substantially unchanging. In such cases it can be useful to define a *static confidence window.* This construct is an expected confidence range which is defined in response to substantially static confidence parameters.

The confidence window has an upper and lower limit reflecting an *inherent* upper and lower limit that the confidence level can potentially reach given the lack of variability in the static confidence parameters. An example of a static fundamental confidence parameter corresponds to the location of a user. Another example might be the situation where the machine storing the requested resources has some longstanding security limitation such as vulnerability to certain viruses or hacking attempts. These security limitations will set an inherent fixed upper limit beyond which the confidence level cannot extend. If the machine on which the requested resources resides is fundamentally limited in its security, there may be contexts where no external authentication act can improve the confidence level to a point where authentication can be achieved.

This embodiment of the invention can be used to simplify the process of comparing the dynamically determined confidence level with the confidence threshold. That is, it can be viewed as a coarse *filter* which tests the context level for potential future fundamental lack of security compliance given the inherent limitations in the confidence of the system.

To summarise these definitions:
- The *confidence level:*: corresponds to the current dynamic level of confidence in authentication.
- The *confidence window:*: corresponds to a set of upper and lower bounds to the confidence level that are set by static confidence parameters or elements other than individual confidence events.
- The *confidence threshold:*: corresponds to the level of confidence in the user authentication that is required before a resource may be accessed.

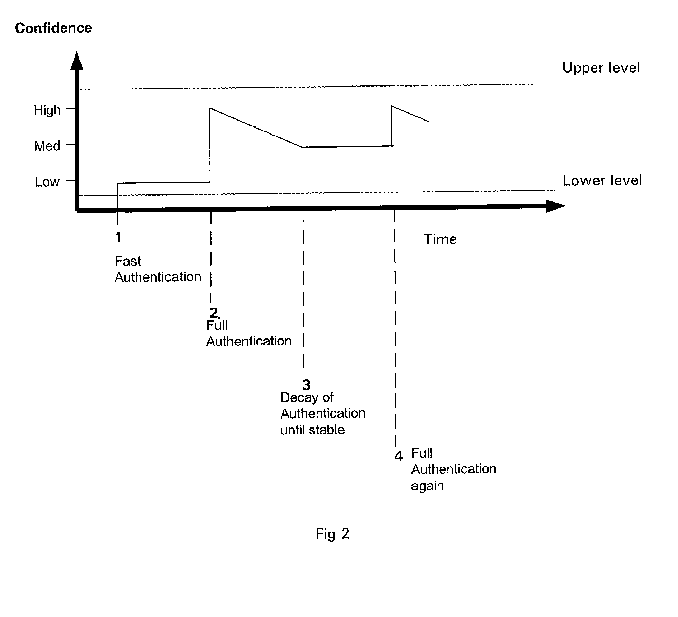

Figure 2 illustrates this situation along with the time progression of a two-step incremental dynamic process for authenticating a users ability to perform a transaction. The vertical axis represents the confidence. The variable line represents the confidence level which is determined by dynamically collecting and assessing the plurality of confidence parameters.

Initially at step 1, a fast authentication is performed. This may be a binary login which validates the user at a relatively low confidence level. Then, after some time has elapsed, a full authentication 2 is performed taking the confidence level to a high level. Given the specific context confidence assumptions (lack of user input etc), the system allows the confidence to decay 3 until the user performs or is required to perform, a full authentication 4 to re-establish the context confidence level.

The dynamic confidence level is monitored and compared with a predetermined threshold. If the confidence level drops below a predetermined confidence threshold, the transaction is not authenticated and if the confidence level exceeds a predetermined confidence threshold, the transaction is authenticated.

In the example shown in figure 2, the static confidence window is established *a priori* and the required confidence threshold falls within this bounded range of confidence. If the authentication threshold had fallen outside this window, authentication will be inhibited and no further analysis is needed. It is anticipated that this embodiment will simplify the function of the Rule Base as it constrains the number of confidence parameters for a given context.

Returning to the generalized form of the invention, its dynamic nature is exemplified by the system dynamically informing the user of whether or not the confidence level meets the confidence threshold. The user can then alter the confidence level, either autonomously or in response to a request from the system. This is done by varying and/or adding one or more confidence parameters such as the user repeating a login process, changing their location or performing a similar action which, although under the control of the user, nevertheless verifies that the user is authorized to access the resource.

Autonomous changes in confidence parameters may occur when the system itself detects a change in an extrinsic factor such as network routing or firewall/proxy behaviour which can affect the confidence level without the users input.

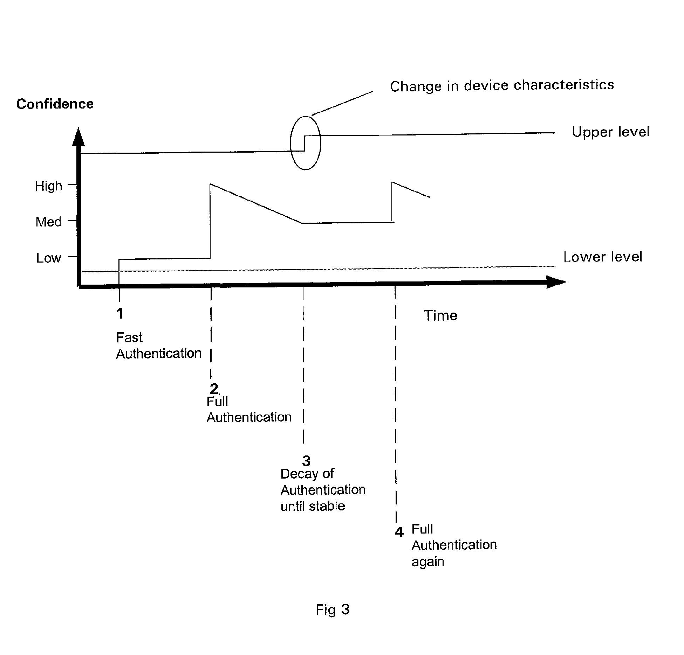

Figure 3 illustrates the situation where the upper bound of the confidence window changes. As discussed above, the confidence window reflects confidence parameters which are considered fundamental and substantially static for a specified transaction context. Such parameters include the characteristics of the user device. In figure 3, the effect of changing the device characteristics is shown by the step in the upper confidence bound. The device security has increased and therefore the potential future confidence level range has been expanded.

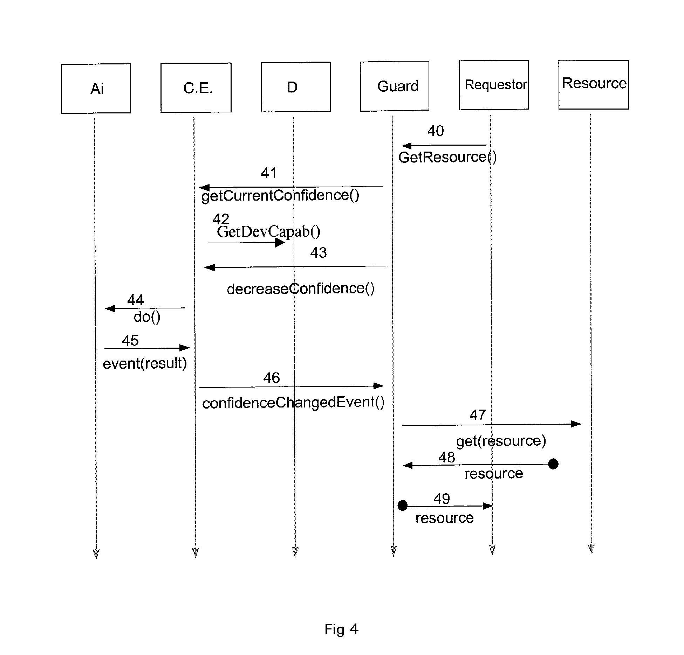

Figure 4 illustrates a dataflow graph for an exemplary transaction where an authentication request fails and the transaction context is therefore reauthenticated. A GetResource request is sent from a requestor to the system, i.e.: from a users device to the system shielding the resource. In this embodiment, this is done by transmitting the request 40 to the Guard & Monitor 16 which shields the resource from the outside world. The Guard & Monitor 16 gets the CurrentConfidence 41 from the Confidence Engine 15 which dynamically monitors the confidence level of the transaction context. The Confidence Engine 15 then requests 42 the Device Capability from the device. In the present example, this act is such as to decrease the confidence level 43. This may be due to the device not being sufficiently sophisticated in terms of security. In response, the Confidence Engine sends a request 44 to an Authentication Mechanism which requires the user to re-authenticate. The result of this 45 is sent back to the Confidence Engine 15 where the changed Confidence Level is transmitted 46 to the Guard whereupon, the Guard & Monitor 16 authenticates the transaction and gets the resource 47. The resource is transmitted 48 to the Guard & Monitor and then passed to the Requestor 49.

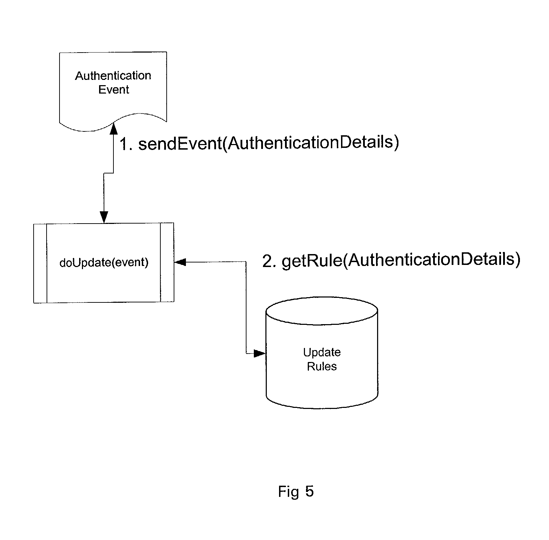

Figure 5 illustrates the confidence update process. Here, the Rule Base 19 operates by applying a one-to-one mapping between the known event type and the known event confidence. The Rule Base can be updated by a number of mechanisms. New rules may be included by acts such as the user device loading new functionality, for example virus monitoring functionality, from the web. Other possibilities include devices exchanging new rules in a peer-to-peer manner. Also, the owner of the resource can classify the meaning of a specific authentication event.

In a preferred embodiment, the system will operate according to the central maxim that the highest level of trust cannot authenticate transactions which require a higher confidence level than the confidence level of the users input device. To this end, a further simple example of an application of the invention can be used to illustrate an implementation of the dynamic authentication process.

According to this scenario, a user working for an insurance company possesses several handheld devices and a standard laptop. The user travels frequently and needs to access sensitive personal and company information when required. Transactions performed with the laptop operating as a standalone device are trusted (i.e.; meet the required confidence threshold). However, the user is aware that certain data should not be displayed in certain environments such as at the airport. Use such as this is considered to be insecure as someone standing close by could view the potentially sensitive data. Also, while the data might be legally able to be viewed in the United States, such viewing in the European Union could violate the European Data Protection Rights.

The user trusts his laptop for the initial authentication mechanism. However, the subsequent context such as location and sensing the proximity other users, indicates that the level of trust should be lower. This sensing may done be using specific hardware to detect the other people, or be predicated upon a set of assumptions about the location and behaviour of the user which defines a statistical likelihood that the security assumptions relating to the situation is in fact correct. The user may therefore be prompted to re-authenticate under new conditions or will simply be denied access to the data. This will depend on the threshold set by the local policy in relation to this class of sensitive data.

If the user is denied access via his laptop, he or she may switch to a different output device such as a mobile phone and obtain the information via audio streaming of the data. This context assumes that "listening" to the data is acceptable and therefore the confidence level exceeds the confidence threshold for the given transaction context. In order to re-authenticate in this physical context, the user would perhaps need to authenticate with a smart card and possibly use some type of biometric sensor which ensures that the correct person is in fact listening to the data.

Other more complicated transaction contexts can be constructed involving combinations of factors such as location, user device and user behaviour. Indeed, it is envisaged that in extended embodiments of the invention, confidence data could be accumulated based on assumptions about the behaviour of the user.

For example, the determination of the confidence level might involve a set of assumptions about periodic behaviour of the user such as the statistical likelihood that a user will be in a particular location at a particular time or looking at the users spending patterns. Such assumptions may be used to abbreviate the authentication process by requiring a lesser confidence level. However, it is also possible that non-periodic or chaotic behaviour of the user might invalidate established assumptions prompting the system to require a higher confidence level where the circumstances imply some unusual or suspicious behaviour. Such behaviour might reflect a change in routine or consumption patters and therefore reduce the reliability of assumptions about the transaction context. In such a case additional authentication may be required to carry out the 'unusual' transaction.

Embodiments such as these, may involve adaptive learning processes and application of statistical techniques to properly assess the security of the transaction context. However the scope of the invention is to be construed to include such variations and embodiments.

Thus the present invention provides an adaptive technique for authenticating a user in a transaction context. It is extensible to take into account large variations in both user behaviour and transaction context. The invention is also sufficiently flexible to be applied to a large variety of authentication contexts.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of authenticating a users ability to carry out a transaction, the method including the steps of:
- a user initiating an authentication request in order to carry out a secure transaction;
- dynamically collecting and assessing a plurality of confidence parameters, said confidence parameters reflecting factors related to the security of the transaction context; and
- dynamically maintaining a confidence level based on the plurality of confidence parameters whereby if the confidence level drops below a predetermined confidence threshold, the transaction is not authenticated and if the confidence level exceeds a predetermined confidence threshold, the transaction is authenticated.

2. A method claimed in claim 1 wherein the predetermined confidence threshold reflects the sensitivity of the transaction.

3. A method as claimed in claim 1 or 2 wherein a static confidence window is defined in response to substantially static confidence parameters, the confidence window having an upper and lower limit reflecting an inherent upper and lower limit that the confidence level can reach.

4. A method as claimed in claim 3 wherein user authentication is inhibited if the confidence threshold of the transaction is outside the confidence window.

5. A method as claimed in any preceding claim wherein the user alters the confidence level, either autonomously or in response to an external request, by varying and/or adding one or more confidence parameters.

6. A method as claimed in any preceding claim wherein the confidence level varies with time and/or transaction context.

7. A method as claimed in any preceding claim, wherein the confidence level decays over time.

8. A method as claimed in any preceding claim wherein the confidence parameters include:
- intrinsic context parameters such as user input device security, user location, user identity, multiple user co-location, time after users authentication request initiation, required transaction security level, required resource security level and the like; and/or
- extrinsic context parameters such as changes in network characteristics, dynamic changes in the sensitivity of the transaction and the like.

9. A method as claimed in any preceding claim wherein the transaction corresponds to a user requesting access to a resource.

10. A method as claimed in any preceding claims wherein the confidence threshold changes as a function of the capability of the users input device.

11. A method as claimed in any preceding claim wherein the confidence level is determined based the confidence parameters and /or on accumulated statistical data relating to the behaviour of the user.

12. A system for dynamically authenticating a transaction including:
- a confidence engine adapted to:
i. dynamically maintain at least one confidence level by monitoring a plurality of confidence parameters, the confidence level reflecting the security of the transaction context;
ii. compare the derived confidence level with a predetermined confidence threshold, the confidence threshold reflecting the security required to perform the transaction;
iii. when the confidence level is below the confidence threshold, requesting new confidence parameters or varying existing confidence parameters; and
iv. when the confidence level is above the confidence threshold, authenticating the transaction; and
v. a plurality of authentication means adapted to dynamically provide, to the confidence engine, confidence parameters relating to the security of the transaction context.

13. A system as claimed in claim 12 further including a rule database adapted to correlate the plurality of confidence parameters with the confidence level.

14. A system as claimed in claim 12 or 13 further including a guard means adapted to act as a proxy for the resources which are the subject of the transaction.

15. A system as claimed in any one of claims 12 to 14 further including device means adapted so that the user can interact with the authentication system, wherein the device has an authentication level which is taken into account when authenticating the transaction.
